**Europäisches Patentamt**

**European Patent Office**

**Office européen des brevets**

(19)

(11) Veröffentlichungsnummer: **0 045 320**
**A1**

(12) # EUROPÄISCHE PATENTANMELDUNG

(21) Anmeldenummer: **80104421.5**

(22) Anmeldetag: **27.07.80**

(51) Int. Cl.³: **B 01 L 3/00**
**C 02 F 1/28**

(43) Veröffentlichungstag der Anmeldung:
**10.02.82** Patentblatt **82/6**

(84) Benannte Vertragsstaaten:
**CH DE FR LI NL**

(71) Anmelder: **Thiel, Oskar**
**Hauptstrasse 158**
**D-5239 Hattert(DE)**

(72) Erfinder: **Thiel, Oskar**
**Hauptstrasse 158**
**D-5239 Hattert(DE)**

(54) **Filterkerze zur Abreicherung der Chlorid-Ionen, die bei der CSB-Bestimmung störend sind.**

(57) Bei dieser Erfindung wird eine spezielle Glaskerze aus Sonderglas eingesetzt. Das Sonderglas wird in einem bestimmten Körnungsbereich gesintert.

Die Kerze wird mit einem Oxid, Hydroxid, oder Karbonat, bevorzugt der Erdmetalle und weiterer geeigneter Elemente allein oder in Mischung beschickt, um die Chlorid-Ionen aus der zu prüfenden Lösung zu entfernen, die sich im angekoppelten Gefäß wie z.B. Erlenmeyer-Kolben befindet und bei schonend niedrigen Temperaturen lediglich gerührt wird. Das Material zur Absorption der Chlorid-Ionen kann sowohl synthetischer als auch natürlicher Art sein.

Die Apparatur für diesen Zweck kann variiert werden, die Temperaturen passen sich den jeweiligen Probenahmen an.

EP 0 045 320 A1

Croydon Printing Company Ltd.

- 1 -

<u>Filterkerze zur Abreicherung der Chlorid-Ionen,
die bei der CSB-Bestimmung störend sind.</u>

Es ist bekannt, daß bei der CSB-Bestimmung
Chlorid-Ionen bei einem Gehalt von mehr als
1 g/l die Messung stören und man zur Sicherstellung der Ergebnisse die Chlorid-Ionen abreichern muß.
Fällungsmethoden sind zwar möglich, scheitern
aber entweder durch Störung der anschließenden
Messung oder auf Grund der hohen Kosten für
das Fällungsmittel, z.B. Silber und Verbindungen.
Das gebräuchlichste herkömmliche Verfahren ist
die sogenannte Ausblasmethode, deren Nachteil
in der relativ hohen Arbeitstemperaturen liegt,
welche das Untersuchungsergebnis beeinflussen
kann.
Daher wurde die beschriebene Filterkerze entwickelt, die es als technischen Fortschritt ermöglicht, die Abreicherung auf elegante Art und
zudem kostengünstig bei Raumtemperaturen durchzuführen. Hierunter ist ein Schwankungsbereich von
5 - 85°C zu verstehen. Die bevorzugte Temperatur
liegt bei 20 $\pm$ 5°C.
Bei einem Chlorid-Gehalt von mehr als 1 g/l
wurden bei vergleichenden Prüfungen Chlorid-
Ionen-Gehalte ermittelt, die weit unter diesem
Wert lagen. Somit hat sich die Kombination ROBU-
Glas mit den in Patentanspruch 1 unter besonderer
Berücksichtigung der in Patentanspruch 2 bis 4
genannten Verbindungen bewährt.
Zur besseren Übersicht ist eine Zeichnung des

0045320

- 2 -

Gerätes beigefügt, aus der man alle technischen
Daten entnehmen kann.
Die Apparatur kann unter Berücksichtigung der
gegebenen Daten je nach Bedarf variiert werden.
Dies bezieht sich z.B. auf Verbindungsteile,
Verschlüsse und spezielle Anforderungen an die
Filterkerze, die gegebenenfalls durch einen
Schraub-, Steck- oder Bajonettverschluß an die
jeweilige Apparatur angepaßt wird.

Herangezogene Patentschriften:
Deutsche Patentschrift Nr. 1 267 689
                                117 311
                                339 4o5
                                87o 821
Englische Patentschrift Nr.   1o8 619

- 3 -

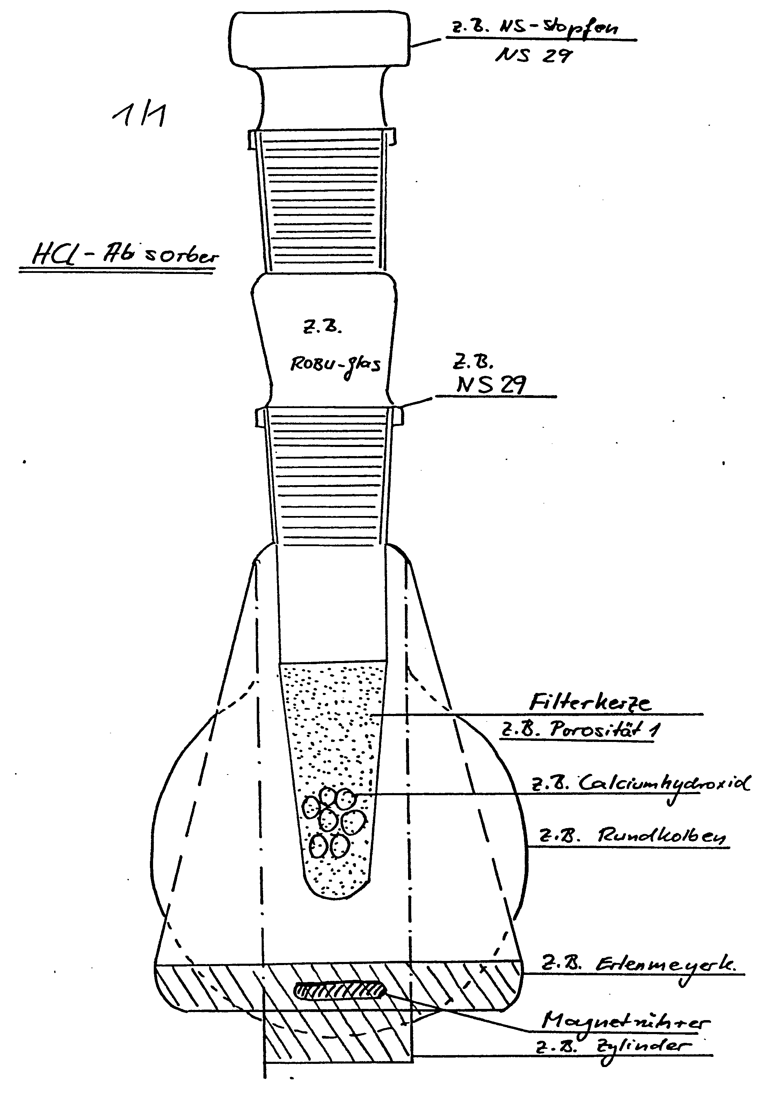

Patentansprüche

1. Filterkerze aus gesintertem Spezialglas, bevorzugt ROBU-Glas, welche speziell zur Salzsäureentfernung in einer gesonderten Zelle ein wasserunlösliches Oxid, Hydroxid oder Karbonat der Erdalkalien oder der Erdmetalle enthält.

2. Verfahren nach Anspruch 1., dadurch gekennzeichnet, daß gebrannter Dolomit eingesetzt wird.

3. Verfahren nach Anspruch 1., gekennzeichnet dadurch, daß pharmazeutisches Aluminiumhydroxid mit einem Säurebindungswert von mehr als 2o, bevorzugt zwischen 27o und 29o, gemessen nach den Bedingungen des USP 17, eingesetzt wird.

4. Verfahren nach Anspruch 1., gekennzeichnet dadurch, daß entsprechende natürliche oder synthetische Verbindungen des Calciums oder Magnesiums eingesetzt werden.

0045320

1/1

HCl - Absorber

z.B. NS-Stopfen
NS 29

z.B.
ROBU-glas

z.B.
NS 29

Filterkerze
z.B. Porosität 1

z.B. Calciumhydroxid

z.B. Rundkolben

z.B. Erlenmeyerk.

Magnetrührer
z.B. Zylinder

0045320

Europäisches
Patentamt

**EUROPÄISCHER RECHERCHENBERICHT**

Nummer der Anmeldung

EP 80 10 4421

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 552 702 (STERILWATER) <br> * Seite 4, Absatz 2; Seite 6, Anspruch 1; Figur 1 * <br> -- | 1 | B 01 L 3/00 <br> C 02 F 1/28 |
| A | GB - A - 668 473 (MERKANTILA et al) | | |
| A | DE - A - 2 222 870 (MESSERSCHMITT et al.) | | |
| A | FR - A - 2 393 765 (KERNFORSCHUNG KARLSR.) | | **RECHERCHIERTE SACHGEBIETE (Int. Cl.³)** |
| A | FR - A - 810 636 (STE ANONYME POUR L'HYDROLOGIE) | | C 02 F 1/28 <br> 1/76 <br> 9/00 |
| A | DE - C - 405 172 (PERMUTIT) | | |
| A | NL - A - 261 880 (MAGNO) <br> ---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-07-1981 | AKOLEYEN |

EPA form 1503.1   06.78